# EUROPEAN PATENT SPECIFICATION

(11) **EP 1 607 331 B1**
(45) Date of publication and mention of the grant of the patent: **07.01.2009**
(21) Application number: 05105114.2
(22) Date of filing: 10.06.2005
(51) Int. Cl.: B65B 11/04, A01F 15/07

(54) **Guiding and retaining means for a bale wrapper**
Führungs- und Haltungsmittel für Ballenwickler
Moyens de maintien et de guidage pour un enveloppeur de balles

(30) Priority: 15.06.2004 GB 0413336
(43) Date of publication of application: 21.12.2005
(73) Proprietor: CNH Belgium N.V., 8210 Zedelgem (BE)
(72) Inventor: Naeyaert, Karel O.R., 8210, Zedelgem (BE); Claeys, Danny N.O., 8730, Oedelem (BE)
(74) Representative: CNH IP Department

(56) References cited:
- EP-A- 0 367 529
- DE-U1- 9 414 220
- US-A- 5 740 662
- US-A- 5 822 967

## Description

The present invention relates to machines for wrapping sheet material around bales of agricultural products, such as silage. More particularly it relates to means for guiding and holding a slip of wrapping material at the end of and between wrapping cycles.

Machines for wrapping sheet material, such as coated plastic film, around bales of agricultural products are well known in the art. They are used for applying an airtight wrapping around the bale in order to prevent later ingress of air and to induce a fermentation process that improves the storing qualities of the product, which may be silage grass, haylage, alfalfa or other. Most wrapping machines are designed for wrapping cylindrical bales, which are produced by the so-called round balers, but there also exist wrappers for rectangular bales, which may be made by large, high-density balers. A common type of wrapper comprises a stationary table, which rotates the bale about a horizontal axis. While the bale is rotated, one or a pair of film dispensers applies the film around the bale surface. The dispenser is mounted to a satellite arm, which is rotated about a central, upright axis in order to revolve the dispenser around the bale. At the end of the wrapping cycle, a guiding and holding arm catches the film between the dispenser and the bale and the satellite arm is stopped. The arm guides the film to a knife, which cuts the film loose from the bale. The free end of the film is pulled against the bale, but it is of no concern if a short end would hang loose. The guiding and holding arm holds the other end of the film against a retainer. The wrapped bale is discharged from the wrapping machine, which is now ready for receiving a new bale. At the start of the next wrapping cycle, the dispenser is rotated around the bale for at least one turn, while the end of the film is still being held against the retainer. When the film is secured against the bale by at least one overlapping layer of film, the guiding and holding arm will release the start end of the film, which is then caught between the bale and the newly dispensed film and finally disappears below the subsequently applied film layers.

The wrapping machine in the baler-wrapper combination New Holland 548 Combi™ is provided with two guiding and holding arm assemblies, which are pivotable between an upper, film catching position, and a lower, film cutting and holding position. In the upper position, the arm extends between the bale and the trajectory of the dispenser. After a strip of film has been pulled over the upright arm, the latter is moved downwards to the knife and a holding pad. The arm should not tear the film apart prematurely, because a loose end of wrapping material would prevent a proper start of a new wrapping cycle as described above. Therefore, the arm comprises along its full length a roller, which is mounted for contacting and guiding the film strip. During downward movement of the arm, the roller is rotating along the coated film surface, which thereby gets no opportunity to stick permanently to the roll.

However, it has been experienced that for certain film qualities, especially for aged film, there is a tendency for the strip to migrate along the roll to its outer end. When the arm is in an inclined position to the sheet film, the rotation of the roller along the surface will impose an outward force upon the film and screw it outwardly. It is possible that the upper border of the film strip finally reaches the end of the arm and hooks behind the extremity of the roll. The film starts tearing and it is possible that it is damaged to the extent that it is pulled loose from the guiding and holding arm. Then there will be no convenient starting end for the next bale and the operator will have to intervene in order to provide a new starting end between the arm and the dispenser and to restart the wrapper. Such operation is particularly time-consuming as the operator has to interrupt the baling operations, stop the tractor and leave the tractor cab to refit the loose end of wrapping material.

Accordingly, there is a need for guiding and holding means, which on the one hand smoothly guides the film material towards its hold position, and on the other hand precludes an outward migration of the film over a distance longer than the length of the guiding and holding means itself.

According to the invention, there is provided a machine for wrapping sheet material around a bale of agricultural product, said machine comprising:
- a table for receiving said bale and rotating the same about a first axis;
- a dispenser unit for holding a roll of said sheet material and dispensing said sheet material to said bale;
- means for rotating said dispenser unit relative to said bale about a second axis, substantially perpendicular to said first axis; and
- an arm assembly movable between a first position in which said arm assembly extends between said bale and the trajectory of said dispenser unit, and a second position in which said arm assembly is capable of holding an end of said sheet material,
said arm assembly comprising a roller extending lengthwise of said arm assembly and capable of rotating around its axis,
characterised in that said arm assembly further comprises a stationary guide member, extending outwardly from said roller and positioned to receive a border of said sheet material during the movement of said arm assembly.

The stationary guide member prevents that sheet material, such as film, which is screwed outwardly along the roller during the downward movement of the arm assembly, reaches the end of the same and hooks therebehind, such that the film is not torn before the next wrapping cycle is started.

Advantageously, the stationary member may comprise a cylindrical member having substantially the same outer diameter as the rotatable roller. This structure provides a smooth transition for the film and reduces the chances of the film tearing when it reaches the stationary portion. A member having a diameter that is slightly smaller than the roller, would equally be effective.

The member may be immobilised by a clamp that is installed between the member itself and a means on the arm assembly for cutting the sheet material at the end of a wrapping cycle. Such means may comprise an element that holds the sheet material against a knife blade. The position of this element may be adjustable in order to optimise the cutting action.

An embodiment of the present invention will no be described in further detail, by way of example only, with reference to the accompanying drawings, in which:
Figure 1 is a generally diagrammatic side view of baler-wrapper combination, comprising a wrapping machine according to the invention;
Figure 2 is a somewhat simplified, perspective view of the wrapping machine of Figure 1, comprising a pair of guiding and holding means;
Figure 3 is a perspective view of one of the guiding and holding means of Figure 2 in a closed position;
Figure 4 is an exploded view of the guiding and holding means of Figure 3; and
Figure 5 is a perspective view of the guiding and holding means of Figure 3 in an open position.

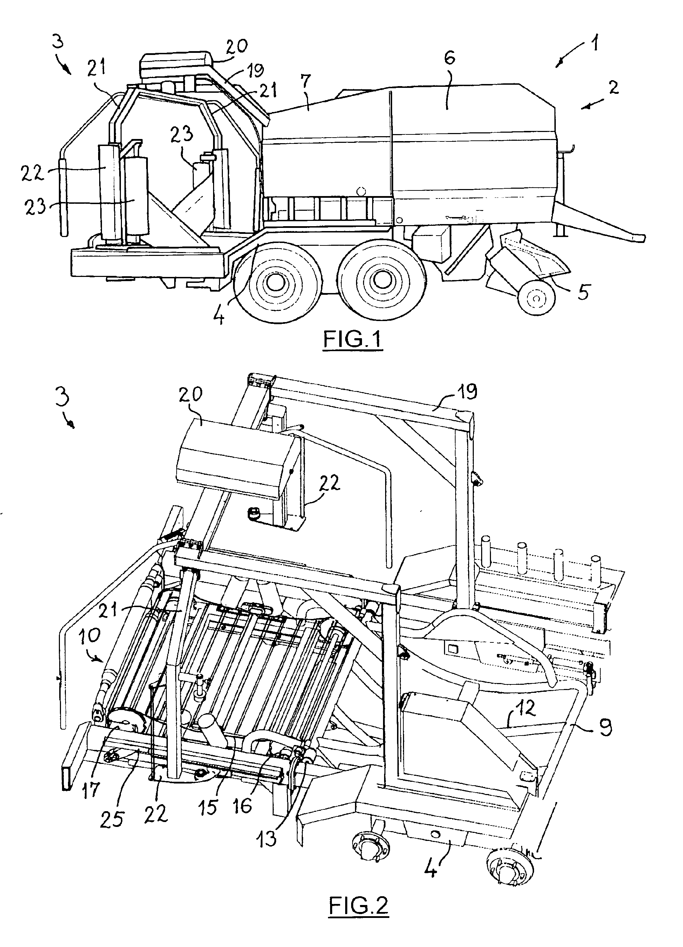

The machine shown in Figure 1 is a baler-wrapper combination 1, comprising a baler unit 2 and a wrapping unit 3, both mounted to a wheeled frame 4. The baler unit 2 shown is a round baler, provided with a pick-up assembly 5 for picking up crop material from a field and feeding it to a cylindrical baling chamber 6. The crop material is collected and compressed inside the baling chamber 6 to form a cylindrical bale, which is stabilised by applying twine or net around its cylindrical periphery. Upon completion of the bale, the tailgate 7 of the baler unit 2 opens to enable transfer of the bale to the wrapper unit 3.

As shown in Figure 2, the wrapper unit 3 is provided with a transfer means 9 for receiving the finished bale and transferring it to a wrapping table 10. The transfer means illustrated comprises a fork 12, which is pivotable about a transverse axis 13 adjacent the front end of the wrapping table. It is also conceivable to use other transfer means such a horizontal belt or chain conveyor, or a shuttle table, which is placed below the open tailgate for receiving the bale and which is moved backwards along a pair of rails or other convenient guide means to transport the bale to the wrapping table 10.

The wrapping table 10 comprises a conveyor 15, e.g. a belt or chain conveyor, which extends between transverse front and rear axes 16, 17. The bale is received and held on the top run of the conveyor 15. Operation of the conveyor makes the cylindrical bale rotate about its own, horizontal axis. It is also possible to replace the conveyor assembly with a pair of transverse rollers, of which one or both are driven to rotate the bale.

The wrapper unit 3 comprises an upper frame 19, affixed to the frame 4 and extending above the area for the bale. The upper frame supports a satellite motor 20 from which extend a pair of satellite arms 21. These arms each support a film dispenser unit 22, which comprises a means for rotatably holding a roll 23 of wrapping film, and a prestretcher means for prestretching the film before it is applied to the surface of the bale. Such dispenser units are well known in the art and will not be described in further detail. Commonly, the wrapper units are provided with two dispenser units, but it is also possible to use a wrapper having only one dispenser unit.

During wrapping operations the satellite motor 20 is energised to rotate the dispenser units 22 around the bale, while conveyor 15 of the wrapping table 10 rotates the bale around its horizontal axis. The film from the roll 23 is prestretched and wrapped around the surface of the bale.

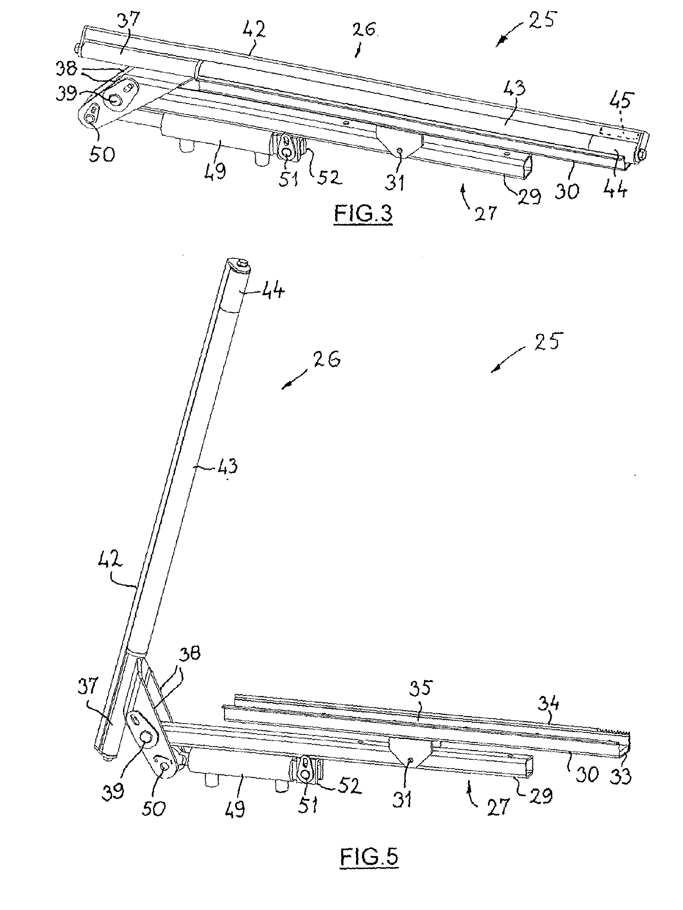

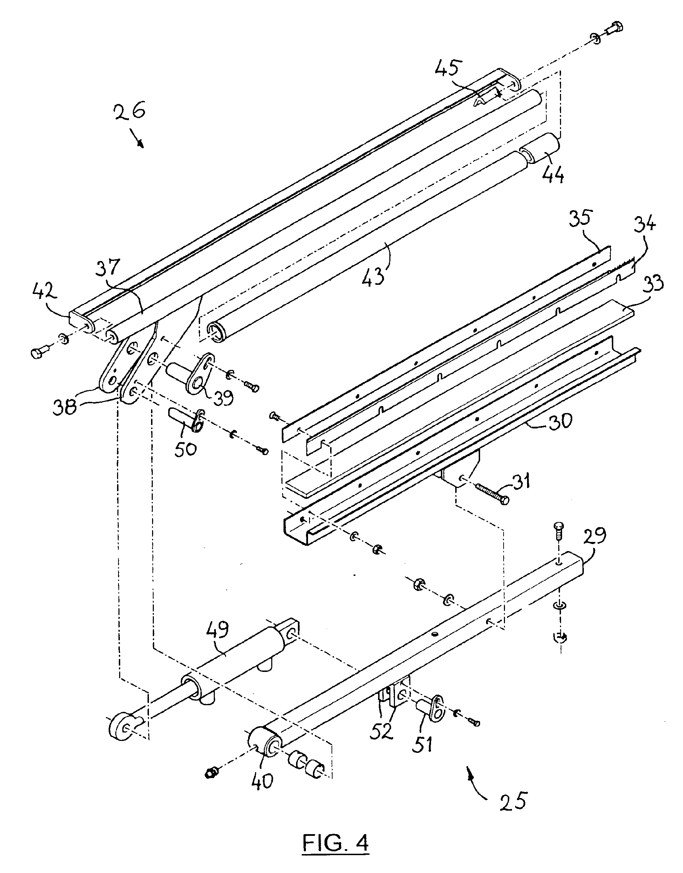

A guide and holding means 25 is provided on each side of the wrapper unit 3. As shown in Figures 3 to 5, it comprises a movable arm assembly 26 and a stationary cradle assembly 27. The latter assembly 27 comprises a support bar 29 which is bolted to a horizontal beam of the frame 4 and a knife table 30, which is mounted by a transverse pivot bolt 31 to the support bar 29. This mounting allows some limited pivotment of the knife table 30, when the arm assembly 26 comes to rest thereagainst as described hereinafter. The knife table 30 comprises a generally U-shaped profile, which holds at its bottom a rubber pad 33, and a knife blade 34, extending along substantially the full length of the knife table 30. The knife blade is securely held against an inner wall of the profile by a knife retainer 35. The outer tip of the knife is serrated in order to induce a positive tearing of the wrapping film in this area.

The arm assembly 26 comprises a cylindrical rod 37, to which are welded two downwardly extending lugs 38. The lugs are mounted on both sides of a bearing 40, which is affixed to the support bar 29, and pivotably connected thereto by a pivot pin 39. A knife clamp 42 extends parallel to the rod 37 over its full length. It is mounted to the ends of the rod 37 by a pair of bolts, which allow angular adjustment of the clamp 42 about the rod axis. Most of the rod 37 is received in a roller 43, which rotates freely about the rod itself. The roller is made out of plastic material, but it also conceivable to use metal, as long as low-friction rotation between the roller and the sustaining rod is made possible. The outer section of the rod 37 carries a further cylindrical member 44. This member 44 has the same diameter and is made out of the same material as the roller 43. However, it is not permitted to rotate freely about the rod axis. To this end it is held in place by an angled clamp 45, which is inserted between the knife clamp 42 and the cylindrical member 44.

The arm assembly 26 can be moved between a substantially horizontal position, as shown in Figure 3, and an upright or angled position, as shown in Figure 5, by a hydraulic cylinder 49. The rod end of the cylinder 49 is connected by a pin 50 to the outer ends of the lugs 38 of the arm assembly 49, and the chamber end is connected by a pin 51 to lugs 52, which extend downwardly from the support bar 29.

During wrapping operation the dispenser units 22 are rotated around the bale, which is rotated about its own axis by the conveyor 15 of the wrapping table 10. The material from the film rolls 23 is pulled through the pre-stretcher units, which extend the film and release more adhesive material to the film surface. The prestretched film is applied onto the surface of the bale. During this phase the guide and holding means 25 are in their lower position, as shown in Figure 3, such that there is no interference between the arm assembly 26 and the run of film between the dispenser units 22 and on the bale.

When the bale is completely wrapped, the arm assembly 26 is raised to the position of Figure 5. At the next passage of the dispenser unit 22, the arm assembly 26 is caught by a stretch of film material. The satellite motor 20 is halted and the arm assembly 26 is lowered, thereby pulling the film material downwardly towards the cradle assembly 27. The movable roller 43 engages the coated side of the film and rotates therealong while stretching the film somewhat further. The rotation of the roller 43 divides the forces on the film over the film sections on both sides of the arm assembly 26, such that it does not reach its stretch limit and does not start to tear apart. While the arm assembly 26 pivots downwards, the upper edge of the film is screwed along the rotating roller 43 towards the outer end of the rod 43. Eventually, this edge reaches the stationary member 44. It still can slide along this member 44 of the arm assembly 26, but the screwing action on this part of the film has stopped. Accordingly, there is no tendency anymore for the upper strip of the film to migrate to the outer end of the rod 37 and to get hooked behind the same. Further film material driven outwardly by the rotating roller 43, will be pushed against the halted film border and start to wrinkle in the same area without breaking.

As the film edge is stopped adjacent the stationary member 44, it is not stretched as far as it would have been in case the roller 43 extended over the full length of the arm assembly 26. Chances of tearing are thereby also reduced.

The arm assembly 26 finally arrives at its horizontal position, wherein it catches the film between the roller 43 and the rubber pad 33 of the cradle assembly 27. The knife clamp 42 pushes the film against the knife blade 34, which tears the film and cuts the stretch between the cradle assembly 27 and the bale loose from the stretch between the cradle assembly 27 and the dispenser unit 27. The latter portion is kept in place by the arm assembly 26, while the first portion is released and floats against side surface the bale. Then the wrapping table 10 is pivoted rearwardly to deposit the wrapped bale onto the field.

The wrapping table 10 re-assumes its original, horizontal position and the dispenser units 22 and the guide and holding means 25 are held stationary, until the transfer means 9 load a fresh bale of crop material on the wrapping table 10. Then, the wrapping table 10 and the satellite arms 21 start to rotate at a slow speed. The dispenser units 22 dispense the film around the bale, while the outer slip of the film is still being held against the rubber pad 33. The presence of a wrinkled film section near the upper border improves it resistance against tearing during this phase. When the dispenser units 22 have completed at least one revolution, the cylinders 49 raise the arm assemblies 27 for a short period in order to release the film end. Thereafter the arm assemblies 27 are lowered again to prevent interference with the newly applied film or with the rotating dispenser units 22. The satellite motor 20 is then driven at full speed for wrapping the remainder of the bale surface. The slip of film material which has been released from the guide and holding means 25, floats against the bale surface and is covered by the subsequent layers of film.

Hence, there is provided a guiding and holding means 25 that is capable of guiding the film material smoothly to a holding position and which is not prone to defective operation caused by the tearing of said film during said guiding operation. The rotatable guide roller 43 allows relative movement between the film and the guiding means, thereby precluding excess local tensions that would break the film, and the outer stationary member portion limits the movement of the film to a location where it hooks behind the guiding means itself.

Although the present invention has been described with reference to a particular wrapping machine, it should be understood that the invention is not limited to this particular embodiment. Other embodiments can be thought of without departing from the scope of the invention as defined by the claims. For instance, the invention may equally be applied in an independent wrapping machine, which is not linked to a baler. It may also be used in a wrapping machine of the type using one or two stationary dispensers and a wrapping table that rotates about a central, upright axis. The stationary member at the outer end of the rod may equally be secured by conventional connection means such as bolts or glue.

## Claims

1. A machine (3) for wrapping sheet material around a bale of agricultural product, said machine comprising:
- a table (10) for receiving said bale and rotating the same about a first axis;
- a dispenser unit (22) for holding a roll of said sheet material and dispensing said sheet material to said bale;
- means (20, 21) for rotating said dispenser unit (22) relative to said bale about a second axis, substantially perpendicular to said first axis; and
- an arm assembly (26) movable between a first position in which said arm assembly extends between said bale and the trajectory of said dispenser unit (22), and a second position in which said arm assembly is capable of holding an end of said sheet material,
said arm assembly (26) comprising a roller (43) extending lengthwise of said arm assembly and capable of rotating around its axis,
**characterised in that** said arm assembly (26) further comprises a stationary guide member (44), extending outwardly from said roller (43) and positioned to receive a border of said sheet material during the movement of said arm assembly.

2. A machine according to claim 1, **characterised in that** said stationary guide member (44) comprises a cylindrical member, having substantially the same outer diameter as said rotatable roller (43).

3. A machine according to claim 1, **characterised in that** said stationary guide member (44) comprises a cylindrical member, having an outer diameter slightly smaller than said rotatable roller (43).

4. A machine according to claim 2 or 3, **characterised in that** said cylindrical member (44) is held stationary by a clamp (42) installed between said cylindrical member (44) and a means (42) installed on said arm assembly (26) for cutting said sheet material.

5. A machine according to any of the preceding claims, **characterised in that** said arm assembly (26) is mounted for pivotment about a substantially horizontal axis (39).

6. A machine according to claim 5, **characterised in that** said first position is an upright or inclined position and said second position is a horizontal position.

7. A machine according to claim 5 or 6, **characterised in that**, in said second position, said arm assembly (26) is positioned adjacent a cutting means (34).

8. A machine according to any of the preceding claims, **characterised in that** the machine (3) is mounted to the rear end of a baler unit (2).

9. A machine according to any of the preceding claims, **characterised in that** said means for rotating said dispenser unit (22) comprise a satellite arm (21) which is mounted for rotation about an upright axis and motor means (20) for rotating said satellite arm (21).

## Patentansprüche

1. Maschine (3) zum Wickeln von bahnförmigem Material um einen Ballen eines landwirtschaftlichen Produktes, wobei die Maschine Folgendes umfasst:
- einen Tisch (10) zur Aufnahme des Ballens und zu dessen Drehung um eine erste Achse;
- eine Abgabeeinheit (22) zum Tragen einer Rolle des bahnförmigen Materials und zur Abgabe des bahnförmigen Materials an den Ballen;
- Einrichtungen (20, 21) zum Drehen der Abgabeeinheit (22) gegenüber dem Ballen um eine zweite Achse im Wesentlichen senkrecht zu der ersten Achse; und
- eine Arm-Baugruppe (26), die zwischen einer ersten Position, in der sich die Arm-Baugruppe zwischen dem Ballen und der Bewegungsbahn der Abgabeeinheit (22) erstreckt, und einer zweiten Position beweglich ist, in der die Arm-Baugruppe in der Lage ist, ein Ende des bahnförmigen Materials zu halten,
- wobei die Arm-Baugruppe (26) eine Walze (43) umfasst, die sich in Längsrichtung der Arm-Baugruppe erstreckt und sich um ihre Achse drehen kann,
- **dadurch gekennzeichnet, dass** die Arm-Baugruppe (26) weiterhin ein stationäres Führungselement (44) umfasst, das sich von der Walze (43) aus nach außen erstreckt und zur Aufnahme eines Randes des bahnförmigen Materials während der Bewegung der Arm-Baugruppe angeordnet ist.

2. Maschine nach Anspruch 1, **dadurch gekennzeichnet, dass** das stationäre Führungselement (44) ein zylindrisches Element umfasst, das im Wesentlichen den gleichen Außendurchmesser aufweist, wie die drehbare Walze (43).

3. Maschine nach Anspruch 1, **dadurch gekennzeichnet, dass** das stationäre Führungselement (44) ein zylindrisches Element mit einem Außendurchmesser umfasst, der geringfügig kleiner als der der drehbaren Walze (43) ist.

4. Maschine nach Anspruch 2 oder 3, **dadurch gekennzeichnet, dass** das zylindrische Element (44) durch eine Klammer (42) stationär gehalten ist, die zwischen dem zylindrischen Element (44) und einer Einrichtung (42) eingebaut ist, die auf der Arm-Baugruppe (26) zum Schneiden des Bahnmaterials eingebaut ist.

5. Maschine nach einem der vorhergehenden Ansprüche, **dadurch gekennzeichnet, dass** die Arm-Baugruppe (26) für eine Schwenkbewegung um eine im Wesentlichen horizontaler Achse (39) befestigt ist.

6. Maschine nach Anspruch 5, **dadurch gekennzeichnet, dass** die erste Position eine aufrechtstehende oder geneigte Position ist und dass die zweite Position eine horizontale Position ist.

7. Maschine nach Anspruch 5 oder 6, **dadurch gekennzeichnet, dass** die Arm-Baugruppe (26) in der zweiten Position benachbart zu einer Schneideinrichtung (34) angeordnet ist.

8. Maschine nach einem der vorhergehenden Ansprüche, **dadurch gekennzeichnet, dass** die Maschine (3) an dem hinteren Ende einer Ballenpressen-Einheit (2) befestigt ist.

9. Maschine nach einem der vorhergehenden Ansprüche, **dadurch gekennzeichnet, dass** die Einrichtungen zum Drehen der Abgabeeinheit (22) einem Satelliten-Arm (21), der für eine Drehung um eine aufrechtstehende Achse befestigt ist, und Motoreinrichtungen (20) zum Drehen des Satelliten-Armes (21) umfassen.

## Revendications

1. Machine (3) pour envelopper un matériau en feuille autour d'une balle de produit agricole, ladite machine comprenant :
- une table (10) pour recevoir ladite balle et faire tourner celle-ci autour d'un premier axe,
- un dispositif de distributeur (22) pour maintenir une bobine dudit matériau en feuille et distribuer ledit matériau en feuille à ladite balle,
- un moyen (20, 21) pour faire tourner ledit dispositif de distributeur (22) par rapport à ladite balle autour d'un second axe, sensiblement perpendiculaire audit premier axe, et
- un ensemble bras (26) mobile entre une première position dans laquelle ledit ensemble bras s'étend entre ladite balle et la trajectoire dudit dispositif de distributeur (22), et une seconde position dans laquelle ledit ensemble bras est capable de maintenir un bout dudit matériau en feuille,
ledit ensemble bras (26) comprenant un rouleau (43) s'étendant dans le sens longitudinal dudit ensemble bras et capable de tourner autour de son axe,
**caractérisée en ce que** ledit ensemble bras (26) comprend en outre un élément de guide fixe (44), s'étendant à l'extérieur dudit rouleau (43) et positionné pour recevoir un rebord dudit matériau en feuille pendant le mouvement dudit ensemble bras.

2. Machine selon la revendication 1, **caractérisée en ce que** ledit élément de guide fixe (44) comprend un élément cylindrique, ayant sensiblement le même diamètre extérieur que ledit rouleau rotatif (43).

3. Machine selon la revendication 1, **caractérisée en ce que** ledit élément de guide fixe (44) comprend un élément cylindrique, ayant un diamètre extérieur légèrement inférieur audit rouleau rotatif (43).

4. Machine selon la revendication 2 ou 3, **caractérisée en ce que** ledit élément cylindrique (44) est maintenu fixe par une bride de serrage (45) implantée entre ledit organe cylindrique (44) et un dispositif (42) implanté sur ledit ensemble bras (26) pour couper ledit matériau en feuille.

5. Machine selon l'une quelconque des revendications précédentes, **caractérisée que** ledit ensemble bras (26) est monté pour pivoter autour d'un axe sensiblement horizontal (39).

6. Machine selon la revendication 5, **caractérisée en ce que** ladite première position est une position verticale ou inclinée et ladite seconde position est une position horizontale.

7. Machine selon la revendication 5 ou 6, **caractérisée en ce que** ladite seconde position, ledit ensemble bras (26) est positionné de façon adjacente à un dispositif de découpage (34).

8. Machine selon l'une quelconque des revendications précédentes, **caractérisée en ce que** la machine (3) est montée à l'extrémité arrière d'une presse à balles (2).

9. Machine selon l'une quelconque des revendications précédentes, **caractérisée en ce que** ledit moyen pour faire tourner ledit dispositif de distributeur (22) comprend un bras satellite (21) qui est monté pour tourner autour d'un axe vertical et un organe moteur (20) destiné à faire tourner ledit bras satellite (21).
